# EUROPÄISCHE PATENTSCHRIFT

(11) **EP 2 305 581 B1**
(45) Veröffentlichungstag und Bekanntmachung des Hinweises auf die Patenterteilung: **10.07.2013**
(21) Anmeldenummer: 10183810.0
(22) Anmeldetag: 23.03.2007
(51) Int. Cl.: B65G 43/08, B65G 43/10, B65G 47/68, B65G 47/71, B65G 47/88, B65G 47/76, A01K 31/16

(54) **Anordnung und Verfahren mit Längsförderbändern, die zur Batchbildung auf einem Querförderband zeitversetzt in Gang gesetzt werden**
Device and method comprising longitudinal conveyors with time-staggered start for batching on a transversal conveyor
Dispositif et procedé comprenant des convoyeurs longitudinaux pouvant être mis en marche avec un décalage temporel pour la mise en lots dans un convoyeur transversal

(30) Priorität: 24.03.2006 DE 202006004894 U
(43) Veröffentlichungstag der Anmeldung: 06.04.2011
(62) Teilanmeldung aus: 07723534.9
(73) Patentinhaber: Big Dutchman International GmbH, 49377 Vechta (DE)
(72) Erfinder: Südkamp, Heinz, 49413 Dinklage (DE); Kalkhoff, Christian, 49377 Vechta (DE)
(74) Vertreter: Eisenführ, Speiser & Partner

(56) Entgegenhaltungen:
- DE-A1- 2 155 120
- GB-A- 1 406 164
- US-A- 3 247 929
- US-A- 4 542 808
- US-A- 5 551 822
- US-A1- 2004 112 713

## Beschreibung

Die Erfindung betrifft eine Förderanordnung nach dem Oberbegriff von Anspruch 1. Eine solche Förderanordnung ist durch die US 4 542 808 bekannt.

Solche Förderanordnungen werden beispielsweise eingesetzt, um Eier von einem Legebereich weg zu transportieren und einer Verpackungsstation zuzuführen. Hierzu werden insbesondere Förderanordnungen verwendet, welche ein Querförderband, welches Produkte zu einer Verarbeitungsstation fördert, und mehrere Längsförderbänder, die so angeordnet sind, dass sie Produkte von verschiedenen, voneinander beabstandeten Orten auf das Querförderband befördern, umfassen. Die Längsförderbänder erstrecken sich hierbei entlang einer Stall- oder Volierenreihe und sind in der Regel für jede Etage einzeln vorgesehen. Die Querförderbänder sind typischerweise rechtwinklig zu den parallel angeordneten Längsförderbändern montiert und nehmen die von den Längsförderbändem aus den Legebereichen transportierten Eier auf.

Ein erstes Problem, was bei solchen Förderanordnungen auftritt, besteht darin, dass durch die sich zeitlich erstreckende Förderung der Eier auf den Längsförderbändem die Zufuhr der Eier über das Querförderband zu der Verarbeitungsstation diskontinuierlich und insbesondere in einer nicht ausreichenden Menge erfolgt, um die Verarbeitungskapazität der Verarbeitungsstation auszulasten. Um dies zu vermeiden, ist es bekannt, mehrere Längsförderbänder gleichzeitig zu aktivieren, um das Querförderband mit einer ausreichenden Menge von Eiern zu versorgen. Ein Problem bei dieser Vorgehensweise liegt jedoch darin, dass durch die beabstandete Einmündung der Längsförderbänder das Querförderband nicht gleichmäßig ausgelastet werden kann und lokale Überschreitungen der Querförderbandkapazitäten erfolgen, was regelmäßig zu Beschädigungen der Eier führt.

Ein weiteres Problem bei Förderanordnungen dieser Art besteht darin, dass zu Beginn des Fördervorgangs und zum Ende des Fördervorgangs nur kleine Förderraten der Eier realisiert werden, da durch Anlauf des ersten Längsförderbands und Auslauf des letzten Längsförderbandes eine zu geringe Zulieferung auf das Querförderband erfolgt. Hierdurch verlängert sich die Verarbeitungszeit an der Verarbeitungsstation, was aus Kostengründen nachteilhaft ist.

Insbesondere in größeren Stallanlagen ist es oftmals erwünscht, die Eier aus bestimmten Stellen gruppenweise einzusammeln, beispielsweise weil in bestimmten Ställen ein anderes Futter verabreicht wird als in anderen Ställen und die auf diese Weise produzierten Eier sollen als zusammenhängender Block der Verarbeitungsstation zugeführt werden, um gemeinsam verarbeitet, beispielsweise verpackt zu werden. In gerade solchen Fällen, wo der Eiersammelvorgang mit beispielsweise bis zu 15 unterschiedlichen Gruppen aufeinanderfolgend stattfindet, ist jedoch eine jederzeitige Auslastung der Verarbeitungskapazität der Verarbeitungsstation mit den bisher bekannten Maßnahmen, verschiedene Längsförderbänder gleichzeitig einzuschalten, nicht erreichbar, so dass in solchen Anwendungsfällen erheblich längere Betriebszeiten der Verarbeitungsstation und folglich längere Sammelzeiten und höhere Betriebskosten in Kauf genommen werden müssen.

Ein weiteres Problem bei solchen Förderanordnungen entsteht insbesondere durch die tierfreundliche Volierenhaltung von Legehennen. Bei der Volierenhaltung wird den Tieren ein Nest angeboten, in dem die Tiere bevorzugt die Eier legen. Aus dem Nest rollen die Eier auf das Längsförderband. Durch die lokal konzentrierte Häufung der gelegten Eier kommt es jedoch im Nestbereich zu einer Überfüllung des Längsförderbands, was zu Beschädigungen der Eier führen kann. Während es bei der Käfighaltung zu einer Verteilung der gelegten Eier über die gesamte Käfigbreite kommt und folglich eine einmalige Aktivierung der Längsförderbänder am Tag zum Einsammeln der gelegten Eier genügte, ist es bei der Volierenhaltung erforderlich, den Sammelvorgang mehrmals täglich durchzuführen aufgrund der lokalen Überfüllung der Längsförderbänder.

Noch ein weiteres Problem bei solchen Förderanordnungen besteht darin, dass durch Stockungen oder Verarbeitungsprobleme vor bzw. in der Verarbeitungsstation ein Stau entstehen kann und hierdurch hohe Kräfte auf die Eier einwirken können. Es ist bekannt, zur Vermeidung dieses Problems einen durch die Eiansammlung betätigten Endschalter vorzusehen, der das Querförderband bei Auftreten einer unzulässig hohen Kraft abschaltet. Dies führt jedoch, insbesondere unter dem Gesichtspunkt, dass eine Ausnutzung der vollen Kapazität der Verarbeitungsstation gewünscht ist und folglich ein gewisser Stau vor der Verarbeitungsstation als Puffer angestrebt wird, zu einer sehr häufigen An- und Abschaltung des Querförderbands, was einen erhöhten Verschleiß und vorzeitigen Ausfall bewirken kann.

Schließlich besteht ein weiteres Problem bekannter Fördervorrichtungen darin, dass bei Zuförderung von Produkten aus mehreren Förderbändern auf ein gemeinsames Sammelförderband oftmals Beschädigungen der Produkte auftreten, wenn die zusätzlich hinzugeförderten Produkte zunächst die bereits auf dem Sammelförderband befindlichen Produkte verdrängen müssen und hierbei unzulässig hohe Kräfte zwischen den Produkten wirken. Es ist bekannt, zur Vermeidung solcher Beschädigungen zur Bewegung des Sammelförderbands ortsfest befestigte Produktleiteinrichtungen vorzusehen, welche die bereits auf dem Sammelförderband befindlichen Produkte vor den Einmündungsbereichen weiterer Produkte so zu leiten, dass sie vom Einmündungsbereich weggeführt werden und hierdurch Platz für die zusätzlich hinzukommenden Produkte geschaffen wird. Diese Produktleiteinrichtungen müssen insbesondere bei sich ändernden Zuförderbedingungen, sei es durch Zuförderung aus unterschiedlichen Zuförderbändern oder sich ändernden Zuförderquoten, regelmäßig unterschiedlich platziert und eingestellt werden, was deren Handhabung erschwert.

Aus GB 1406164 ist eine Vorrichtung zum Einsammeln von Eiern in einem Hühnerstall für Legehennen vorbekannt. Die Vorrichtung weist mehrere Längsförderbänder auf, die neben-und übereinander angeordnet sind. Weiterhin weist die Vorrichtung ein Querförderband auf, auf welches die Längsförderbänder die Eier fördern. Die Förderbewegung des Querförderbandes kann mittels eines Getriebes mit der Förderbewegung der Längsförderbänder gekoppelt werden.Der Erfindung liegt die Aufgabe zugrunde, eine Förderanordnung bereitzustellen, welche eines und vorzugsweise mehrere der vorgenannten Probleme vermeidet.

Dies wird erfindungsgemäß durch die Förderanordnung nach Anspruch 1, erreicht.

Erfindungsgemäß wird zur Vermeidung der eingangs genannten Nachteile weiterhin eine Förderanordnung vorgeschlagen, umfassend: ein Querförderband, welches Produkte zu einer Verarbeitungsstation fördert, und mehrere Längsförderbänder, die so angeordnet sind, dass sie Produkte an verschiedenen, voneinander beabstandeten Orten auf das Querförderband befördern, wobei die Förderanordnung durch eine Vorrichtung zum Erfassen des Förderfortschritts des Querförderbands und eine mit dieser Vorrichtung gekoppelte Regelungsvorrichtung, die ausgebildet ist, um zu Beginn eines Fördervorgangs der Förderanordnung die Längsförderbänder in Abhängigkeit des Abstands zwischen ihrer Einmündung auf das Querförderband und der Verarbeitungsstation und in Abhängigkeit des Förderfortschritts des Querförderbands zeitversetzt in Gang zu setzen, fortgebildet ist.

Die erfindungsgemäße Förderanordnung ist so ausgebildet, dass die Regelungsvorrichtung ausgebildet ist, um so viele Längsförderbänder zu aktivieren und/oder die Fördergeschwindigkeit der aktivierten Längsförderbänder so zu regeln, dass jedem Bereich des Querförderbandes so viele Produkte zugeführt werden, dass eine vorbestimmte Kapazität der Verarbeitungsstation erreicht wird. Auf diese Weise wird durch Aktivierung und/oder Geschwindigkeitsregelung der Längsförderbänder zu jedem Zeitpunkt eine volle Kapazitätsauslastung der Verarbeitungsstation erzielt.

Solche Förderanordnungen werden beispielsweise benutzt, um aus Produktionseinheiten, die über eine große Fläche verteilt sind, die Produkte einzusammeln und zu einer gemeinsamen Verarbeitungsstation zu fördern. Hierzu sind typischerweise mehrere parallel angeordnete und zueinander versetzte Längsförderbänder vorgesehen, die an voneinander beabstandeten Punkten auf ein gemeinsames Querförderband treffen und welche die Produkte auf das Querförderband fördern. Problematisch an solchen Förderanordnungen ist insbesondere, dass bei diskontinuierlichem Betrieb der Längsförderbänder auch eine diskontinuierliche Zufuhr der Produkte zur Verarbeitungsstation erreicht wird und zudem, bedingt durch die räumliche Anordnung, eine Auslastung der Kapazität der Verarbeitungsstation und der typischerweise auf diese Kapazität abgestimmte Förderkapazität des Querförderbands nicht möglich ist. Diesem Nachteil hilft der vorgenannte Erfindungsaspekt ab, indem der Förderfortschritt des Querförderbands erfasst wird, beispielsweise mittels eines Taktgebers, und eine Regelungsvorrichtung eingesetzt wird, die aus dem Förderfortschritt und der Anordnung der Einmündung der Längsförderbänder auf das Querförderband die diskontinuierliche Aktivierung der Längsförderbänder regelt. Diese Regelung kann einerseits in einer Aktivierung der Längsförderbänder (binäre Regelung) oder in einer Regelung der Fördergeschwindigkeit der Längsförderbänder bestehen. Typischerweise kann auf diese Weise eine zeitversetzte Ansteuerung der Längsförderbänder in einer solchen Art erfolgen, dass die Produkte in einer geschlossenen Front und unter Ausnutzung der Kapazität des Querförderbands gefördert werden und folglich auch die Kapazität der Verarbeitungsstation voll genutzt wird und zudem können bei nachlassender Förderung von Produkten aus einem einzelnen Längsförderband die anderen oder ein anderes Längsförderband in der Förderung hochgefahren, um dies zu kompensieren und die Kompensation ortsaufgelöst in das Querförderband einzuleiten an der Stelle, an der das Defizit aufgetreten ist. Die solcherart vorgeschlagene Regelung der Förderanordnung ermöglicht es erstmals, die Kapazität der Verarbeitungsstation in jedem Betriebszustand voll zu nutzen und hierbei Unterbrechungen des Querförderbands und Schwankungen in der Förderleistung der Längsförderbänder in die regel- und Steuervorgänge einbeziehen zu können.

Insbesondere kann diese Förderanordnung mit Zählvorrichtungen für die Produkte kombiniert werden, die an den Einmündungsstellen der Längsförderbänder auf das Querförderband angeordnet sind und die aus jedem einzelnen Längsförderband zugeförderten Produkte erfassen und zählen. Die Präzision der Regelung kann durch Verwertung der so ermittelten Zähldaten weiter erhöht werden.

Es ist insbesondere bevorzugt, die zuvor beschriebene Förderanordnung fortzubilden, indem die Regelungsvorrichtung ausgebildet ist, um ein am weitesten von der Verarbeitungsstation entferntes erstes Längsförderband zuerst in Gang zu setzen und ein näher zur Verarbeitungsstation angeordnetes zweites Förderband zu einem Zeitpunkt in Gang zu setzen, zu dem das Querförderband soweit fortgeschritten ist, dass die vom ersten Längsförderband zugeförderten Produkte den Einmündungsbereich des zweiten Längsförderbands erreicht haben. Mit dieser Fortbildung wird erreicht, dass nach einem Stillstand der Anlage, insbesondere nach vollständigem Leerfahren der Förderanordnung, das Querförderband in einer solchen Weise aus den mehreren Längsförderbändem beladen wird, dass vermieden wird, dass über einen längeren Querförderbandabschnitt nur vereinzelte Produkte angeordnet sind, sondern stattdessen eine Front von aufgeladenen Produkten voller Kapazität der Verarbeitungsstation auf dem Querförderband ausgebildet wird und hierdurch eine Vollauslastung der Verarbeitungsstation zu einem vorbestimmbaren Zeitpunkt eingeregelt werden kann. Dies ist beispielsweise in der Anwendung der Eiersammlung aus mehreren Stellen sehr vorteilhaft, um die örtlich voneinander beabstandeten Produktionsstellen der Eier in einer solchen Weise einer Packstation zuzuführen, dass die Packstation bei Arbeitsbeginn des Personals voll ausgelastet betrieben werden kann.

Weiterhin ist es bei den zuvor genannten Förderanordnungen vorteilhaft, wenn zumindest zwei Gruppen von Längsförderbändern definiert sind und die Regelungsvorrichtung ausgebildet ist, um die Produkte der Längsförderbänder einer ersten Gruppe auf dem Querförderband vor den Produkten der Längsförderbänder einer zweiten Gruppe anzuordnen. Oftmals ist es gewünscht, Förderanordnungen in einer solchen Weise zu betreiben, dass aus bestimmten Bereichen, insbesondere mehreren voneinander beabstandeten Bereichen, die Produkte gemeinsam eingesammelt werden und erst nach diesem Sammelvorgang die Produkte aus anderen, wiederum mehreren, voneinander beabstandeten Bereichen eingesammelt werden. Auf diese Weise können zwei oder mehr Gruppen von Produktionsbereichen definiert werden, aus denen zeitlich aufeinanderfolgend eingesammelt wird. Die Sicherstellung einer permanenten Kapazitätsauslastung der Verarbeitungsstation ist gerade bei solchen Sammelstrategien mit Förderanordnungen nach dem Stand der Technik nicht erzielbar. Mit der Förderanordnung gemäß der Erfindung wird es nun durch die Regelung der Längsförderbänder in Abhängigkeit ihres Einmündungsorts und in Abhängigkeit des Querbandfortschritts erstmals möglich, auch eine solche gruppenweise Einsammlung durchzuführen und hierbei eine permanente Kapazitätsauslastung der Verarbeitungsstation zu erzielen. Dabei wird nach dem Prinzip vorgegangen, ebenso wie bei der gemeinsamen Einsammlung und Verarbeitung aller Produktionsbereiche, die Produktionsbereiche einer Gruppe solcherart über die entsprechenden Längsförderbänder dem Querförderband zuzuführen, dass eine geschlossenen Front in voller Verarbeitungsstationskapazität ausgebildet wird und nach vollständiger Einsammlung der Gruppe eine nächste geschlossene Front der nächsten Gruppe unmittelbar hinter dem Ende der vorherigen Gruppe ausgebildet wird u.s.w.

Dabei ist es insbesondere bevorzugt, wenn die Regelungsvorrichtung ausgebildet ist, um in jeder Gruppe zuerst das am weitesten von der Verarbeitungsstation entfernte Längsförderband zu betätigen. Auf diese Weise wird wiederum erreicht, dass die Gruppen in sich geschlossene Kapazitätsauslastungen der Verarbeitungsstation erzielen und ein längeres Nachlaufen des Querförderbands bei niedriger Kapazitätsauslastung vermieden wird.

Weiterhin ist es bevorzugt, wenn die Regelungsvorrichtung ausgebildet ist, um die Längsförderbänder der Gruppe mit dem am weitesten von der Verarbeitungsstation entfernten Längsförderband als letzte Gruppe zu betätigen. Dies hat sich als vorteilhaft herausgestellt, da ansonsten eine die Auslastung der Verarbeitungsstation störende, größere Lücke auf dem Querförderband auftreten würde, wenn beispielsweise eines der vorderen Längsförderbänder in einer vorderen Gruppe eingesammelt wird und hierauf folgend das letzte Längsförderband betätigt wird, wodurch das Querförderband über eine Länge produktfrei bleibt, die dem Abstand zwischen dem vorderen und dem letzten Längsförderband entspricht. Alternativ hierzu könnte das am weitesten von der Verarbeitungsstation entfernte Längsförderband in der letzte Gruppe aktiviert werden und diese Aktivierung einen vorbestimmten Zeitraum vor Beendigung der Aktivierung des letzten Längsförderbands der vorherigen Gruppe erfolgen. In diesem Fall wird das Förderende der vorherigen Gruppe vorausberechnet und das weitest entfernt liegende Längsförderband so gestartet, dass eine Lücke zwischen den beiden Gruppen vermieden wird.

Die gruppenweise Einsammlung kann weiter optimiert werden, indem die Regelungsvorrichtung ausgebildet ist, um den Zeitpunkt des Stops des letzten Längsförderbands einer Gruppe und der Aktivierung des ersten Längsförderbands einer darauffolgenden Gruppe in Abhängigkeit des Abstands zwischen der Einmündung des letzten Längsförderbands und des ersten Längsförderbands auf das Querförderband und dem Querförderbandfortschritt zu bestimmen. Mit dieser Fortbildung wird es möglich, dass die Regelungsvorrichtung zwischen zwei Gruppen einen definierten - positiven oder negativen - Abstand lässt, indem Stop und Start der entsprechenden Längsförderbänder so gesteuert wird, dass sich die Gruppen gezielt überschneiden oder nicht überschneiden oder einen bestimmten Abstand voneinander aufweisen.

Dabei ist es besonders bevorzugt, wenn die Regelungsvorrichtung ausgebildet ist, um die Längsförderbänder und das Querförderband zu stoppen, wenn das letzte Produkt einer Gruppe in die Verarbeitungsvorrichtung gefördert worden ist. Auf diese Weise wird durch die Regelungsvorrichtung die Möglichkeit geschaffen, an der Verarbeitungsstation eine Umrüstung vorzunehmen, um Produkte unterschiedlicher Gruppen in unterschiedlicher Weise zu verarbeiten. Dabei kann das letzte Produkt einer Gruppe oder das erste Produkt einer folgenden Gruppe als Kriterium herangezogen werden, um den Stop des Querförderbands zu veranlassen.

Es ist weiterhin bevorzugt, wenn die Regelungsvorrichtung ausgebildet ist, um die Zeitpunkte so zu bestimmen, dass die letzten Produkte des letzten Längsförderbandes der ersten Gruppe und die ersten Produkten des ersten Längsförderbands der zweiten Gruppe in einem gemeinsamen Mischbereich auf dem Querförderband abgelegt werden. Auf diese Weise wird ein Mischbereich erzeugt, der beispielsweise Produkte unterschiedlicher Qualitätsstufen enthalten und bei dessen Verarbeitung somit beispielsweise in Kauf genommen werden muss, dass Produkte einer höheren Qualitätsstufe in eine Verpackung einsortiert werden, die mit einer niedrigeren Qualitätsstufe klassifiziert ist. Jedoch kann mit dieser Fortbildung der Vorteil erreicht werden, dass die Kapazität der Verarbeitungsstation ohne Unterbrechung voll ausgelastet wird und ein fließender Wechsel zwischen den Produkten der ersten und der zweiten Gruppe stattfindet. In diesem Fall wird der Mischbereich in der Verarbeitungsstation so behandelt wie die Gruppe mit den Produkten der niederen Qualität und dementsprechend vor oder nach Beginn des Mischbereichs die Umstellung der Verarbeitungsweise an der Verarbeitungsstation vorgenommen, je nachdem ob die Produkte sich hinsichtlich der Qualität von Gruppe zu Gruppe verschlechtern oder verbessern.

Schließlich ist es noch bevorzugt, wenn bei der gruppenweisen Einsammlung die Regelungsvorrichtung ausgebildet ist, um die Zeitpunkte des Startens und Stoppens der Längsförderbänder der aufeinanderfolgenden Gruppen so zu bestimmen, dass zwischen den Produkten der ersten Gruppe und der zweiten Gruppe ein Zwischenraum auf dem Querförderband ausgebildet wird. Auf diese Weise kann ohne Unterbrechung des Fördervorgangs ein Zeitraum für die Umrüstung der Verarbeitungsstation geschaffen werden.

Weiterhin ist es bevorzugt, wenn die Regelungsvorrichtung ausgebildet ist, um jedem aktivierten Längsförderband einen Bruchteil der Querförderbandbreite zuzuweisen und die Fördergeschwindigkeit jedes Längsförderbandes so zu regeln, dass die jeweils zugewiesene Breite des Querförderbandes durch das jeweilige Längsförderband mit Produkten aufgefüllt wird. Durch diese Zuweisung kann jedes einzelne Längsförderband in der Förderleistung so eingeregelt werden, dass der ihm zugewiesene Bruchteil der Querförderbandbreite voll ausgelastet wird. Dies erlaubt es, Längsförderbänder, die in besonders schneller Weise geleert werden sollen, mit einem großen Bruchteil der Querförderbandbreite zu versehen und somit bevorzugt einzusammeln und Längsförderbänder, die über einen längeren Zeitraum eingesammelt werden sollen, mit einem nur kleinen Bruchteil der Querförderbandbreite zu versehen, um eine entsprechend langsame Einsammlung zu bewirken.

Insbesondere ist es dabei bevorzugt, wenn jedes Längsförderband eine bestimmte Anzahl von Produkten vorspeichert und die Regelungsvorrichtung mit Sensoren zur Erfassung der auf jedem Längsförderband noch gespeicherten Produkten gekoppelt und ausgebildet ist, um einem Längsförderband mit wenigen Produkten einen geringeren Bruchteil der Querförderbandbreite zuzuweisen als einem Längsförderband mit mehr Produkten, um eine zeitgleiche oder um einen bestimmten Betrag zeitversetzte Beendigung der Leerung aller Längsförderbänder zu erreichen. Diese Fortbildung der Erfindung erreicht, dass neben der mit der erfindungsgemäßen Förderanordnung möglichen vollen Kapazitätsauslastung der Verarbeitungsstation von Anbeginn des Fördervorgangs auch eine Vollauslastung der Verarbeitungsstation bis zum Ende des Fördervorgangs erreicht wird. Die Sensoren zur Erfassung der auf jedem Längsförderband noch gespeicherten Produkte können dabei i einer einfachen Fassung aus Wehsensoren bestehen, die den Förderbandfortschritt des Längsförderbands erfassen. Eine verbesserte Erfassung wird durch zusätzliche Ermittlung der Produktdichte auf dem Längsförderband, beispielsweise durch Produktzählung am Ausgang, erreicht. Insbesondere kann, wenn Gewichtskraftsensoren der zuvor beschriebenen Weise installiert sind, aus den gemessenen Gewichten auf die insgesamt auf dem Längsförderband liegenden Eier geschlossen werden.

Ein typisches Problem bei Förderanordnungen des Standes der Technik besteht darin, dass die Längsförderbänder unterschiedliche Mengen von Produkten bereithalten und hierdurch Längsförderbänder, die mehr Produkte als andere bereitgehalten haben, nach Beendigung des Fördervorgangs aller anderen Längsförderbänder noch nachlaufen müssen und hierdurch eine nur geringe Menge von Produkten auf das Querförderband aus dem einzelnen nachfördernden Längsförderband zugefördert wird und aus dieser Menge die Verarbeitungsstation über einen längeren Zeitraum nicht in ihrer vollen Kapazität ausgelastet werden kann. Dies verursacht zeitintensives Nacharbeiten an der Verarbeitungsstation. Mit der erfindungsgemäßen Fortbildung wird es möglich, solchen Längsförderbändern einen großen Bruchteil der Querförderbandbreite zuzuweisen und hierdurch die Längsförderbänder mit einer größeren Anzahl von Produkten ebenso schnell zu leeren wie die anderen Längsförderbänder. Die erfindungsgemäße Regelungsvorrichtung ermöglicht hierbei eine dynamische Regelung der jeweils zugewiesenen Querförderbandbreiten, d.h. sobald einem voll gefüllten Längsförderband eine größere Querförderbandbreite zugewiesen wird, wird dynamisch die Querförderbandbreite der anderen Längsförderbänder soweit reduziert, dass in der Summe der dem einen Längsförderband zugeschlagene Anteil gewonnen wird. Das Ziel der solcherart modifizierten Regelung ist, die Verarbeitungsstation bis zum Ende der Verarbeitung mit voller Kapazität zu betreiben und ein Nachlaufen der Verarbeitungsstation für vereinzelte nachgeförderte Produkte bei niedriger Kapazitätsauslastung zu vermeiden. Zu diesem Zweck wird es typischerweise erforderlich sein, die Längsförderbänder zeitversetzt zu stoppen, da die nächstliegend zur Verarbeitungsstation liegenden Längsförderbänder zuletzt angehalten werden müssen und das am weitesten entfernte Längsförderband als erstes gestoppt werden muss, um die gewünschte abrupte Beendigung der Produktansammlung auf dem Querförderband zu erzielen.

Es ist insbesondere bevorzugt, wenn die Regelungsvorrichtung mit einem am Auslaufbereich des Querkraftförderbandes angeordneten Kraftsensor oder einem Zählsensor der zuvor beschriebenen Art gekoppelt und ausgebildet ist, um die Fördergeschwindigkeit des Querförderbandes in Abhängigkeit des Sensorsignals zu regeln.

Die Implementation eines solchen Kraftsensors ermöglicht insbesondere im Zusammenhang mit der erfindungsgemäßen Förderanordnung mit Regelungsvorrichtung eine zuverlässige und komfortable Regelung, da die anhand des Kraftsensors bewirkte Variation der Fördergeschwindigkeit des Querförderbands in die Regelung in Form des Querförderbandfortschritts einfließt und somit berücksichtigt werden kann. Mit anderen Worten, es wird erstmals mit der erfindungsgemäßen Förderanordnung möglich, eine Vollauslastung der Verarbeitungsstation zu jedem Zeitpunkt des Fördervorgangs zu erreichen und hierbei oftmalige Starts und Stops des Querförderbands zu vermeiden, indem eine stufenlose Regelung des Querförderbands erfolgt und zugleich eine jederzeit und an jedem Ort des Querförderbands vollständige Auffüllung der Breite des Querförderbands mit Produkten aus den Längsförderbändern erzielt wird.

Schließlich kann die erfindungsgemäße Förderanordnung weiter fortgebildet werden durch eine Anzeigevorrichtung, welche mit der Regelungsvorrichtung gekoppelt ist um von der Regelungsvorrichtung Signale zur ortsaufgelösten Darstellung der Anzahl der Produkte auf dem Querförderband zu erhalten. Die solcherart bereitgestellte Anzeigenvorrichtung ermöglicht es einem Benutzer der Förderanordnung, die Auslastung der einzelnen Förderbandstränge und der Verarbeitungsstation auf einen Blick zu erkennen und - falls erforderlich - die Regelungsvorgänge durch Parameterwahl zu verändern und zu optimieren.

Gemäß eines weiteren Aspekts der Erfindung wird eine Förderanordnung vorgeschlagen, umfassend ein Querförderband und mehrere auf das Querförderband einmündende Längsförderbänder, mit zumindest einer beweglichen Produktleitvorrichtung, welche oberhalb des Querförderbands angeordnet ist und mit einem Aktuator gekoppelt ist, wobei der Aktuator die Produktleitvorrichtung in zumindest zwei Stellungen in den Auflagebereich des Querförderbandes bewegen kann und die Produktleitvorrichtung in solcher Weise seitlich am Querförderband platziert ist, dass sie die Produkte auf dem Querförderband vom Einmündungsbereich zumindest eines Längsförderbandes wegleitet. Mit dieser Förderanordnung ist es möglich, Beschädigungen aufgrund Kollision bereits auf dem Querförderband befindlicher Produkte mit aus dem Längsförderband hinzutretenden Produkten zu vermeiden. Der Aktuator kann elektrisch, pneumatisch, hydraulisch oder in anderer Weise betätigt sein. Die Produktleitvorrichtung kann eine schwenkbar gelagerte Platte sein.

Dabei ist es besonders bevorzugt, wenn mehrere bewegliche Produktleitvorrichtungen, welche jeweils in Förderrichtung des Querförderbandes vor den Einmündungsbereichen mehrerer Längsförderbänder angeordnet sind, vorgesehen sind. Mit dieser Fortbildung wird eine variable Produktleitung in Abhängigkeit des Förderzustands und der aktivierten Längsförderbänder möglich.

Weiterhin ist es bevorzugt, wenn der Aktuator jeder Produktleitvorrichtung mit einer Steuerungsvorrichtung gekoppelt ist und in Abhängigkeit des von der Steuerungsvorrichtung aus zugeförderten Produkten und Querbandfortschritt berechneten Füllgrads des Querförderbands vor der jeweiligen Produktleitvorrichtung betätigt wird, um die Produkte um soweit vom Einmündungsbereich der Längsförderbänder wegzuleiten, wie es der Füllgrad zulässt. So kann vermieden werden, das Produkte vom Querförderband seitlich weggeschoben oder beschädigt werden. Die Produktleitvorrichtung kann so eingestellt werden, dass die maximal mögliche Ablenkung erzielt wird oder nur ein Bruchteil davonb, beispielsweise eine Ablenkung die gerade ausreichend ist, um den Platz auf dem Querförderband für die noch hinzutretenden Produkte zu schaffen.

Weiterhin ist es bei gruppenweiser Einsammlung bevorzugt, wenn der Aktuator jeder Produktleitvorrichtung in Abhängigkeit der gesammelten Gruppe betätigt wird. So kann eine vorprogrammierte Aktuatorbetätigung erfolgen und gruppenabhängig eingestellt werden, wenn die jeweilige Gruppe eingesammelt wird.

Die zuvor beschriebene, erfindungsgemäße Förderanordnung wird vorzugsweise zum Fördern von Eiern auf einem Längsförderband, auf dem eine Mehrzahl voneinander beabstandeter, ortsfester Zwischenspeicherbereiche ausgebildet ist, die so angeordnet sind, dass sie die in Nestbereichen in einer Reihe entlang des Längsbands angeordneten Käfigen gelegten Eier aufnehmen, verwendet.

Die zuvor beschriebene erfindungsgemäße Förderanordnung kann weiterhin zum Fördern von Eiern auf einem Querförderband, dass ausgebildet ist, um Eier in einen Zwischenspeicherbereich zu fördern, der in Förderrichtung vor einer Weiterverarbeitungsanlage, insbesondere einer Verpackungsanlage angeordnet ist, verwendet werden.

Gemäß eines weiteren Aspekts kann die erfindungsgemäße Förderanordnung mit einem Verfahren betrieben werden, mit den Schritten: Fördern von Produkte auf einem Querförderband zu einer Verarbeitungsstation, und Zufördern von Produkten mittels mehrerer Längsförderbänder, zu verschiedenen, voneinander beabstandeten Orten auf das Querförderband, wobei der Förderfortschritt des Querförderbands erfasst wird und zu Beginn des Fördervorgangs die Längsförderbänder in Abhängigkeit des Abstands zwischen ihrer Einmündung auf das Querförderband und der Verarbeitungsstation und in Abhängigkeit des Förderfortschritts des Querförderbands zeitversetzt in Gang gesetzt werden.

Es ist bevorzugt, wenn das am weitesten von der Verarbeitungsstation entfernte erste Längsförderband zuerst in Gang gesetzt wird und ein näher zur Verarbeitungsstation angeordnetes zweites Förderband zu einem Zeitpunkt in Gang gesetzt wird, zu dem das Querförderband soweit fortgeschritten ist, dass die vom ersten Längsförderband zugeförderten Produkte den Einmündungsbereich des zweiten Längsförderbands erreicht haben.

Es ist bevorzugt, wenn vor Beginn des Fördervorgangs zumindest zwei Gruppen von Längsförderbändem definiert werden und zuerst die Längsförderbänder einer ersten Gruppe aktiviert werden und hierauf folgend die Längsförderbänder einer zweiten Gruppe aktiviert werden.

Es ist bevorzugt, wenn in jeder Gruppe zuerst das am weitesten von der Verarbeitungsstation entfernte Längsförderband aktiviert wird.

Es ist bevorzugt, wenn die Längsförderbänder der Gruppe mit dem am weitesten von der Verarbeitungsstation entfernten Längsförderband als letzte Gruppe aktiviert werden.

Es ist bevorzugt, wenn der Zeitpunkt des Stops des letzten Längsförderbands einer Gruppe und der Aktivierung des ersten Längsförderbands einer darauffolgenden Gruppe in Abhängigkeit des Abstands zwischen der Einmündung des letzten Längsförderbands und des ersten Längsförderbands auf das Querförderband und dem Querförderbandfortschritt bestimmt wird.

Es ist bevorzugt, wenn die Längsförderbänder und das Querförderband gestoppt werden, wenn das letzte Produkt einer Gruppe in die Verarbeitungsvorrichtung gefördert worden ist.

Es ist bevorzugt, wenn die letzten Produkte des letzten Längsförderbandes der ersten Gruppe und die ersten Produkten des ersten Längsförderbands der zweiten Gruppe in einem gemeinsamen Mischbereich auf dem Querförderband abgelegt werden.

Es ist bevorzugt, wenn zwischen den Produkten der ersten Gruppe von Längsförderbändem und den Produkten der zweiten Gruppe von Längsförderbändem ein Zwischenraum auf dem Querförderband ausgebildet wird.

Es ist bevorzugt, wenn so viele Längsförderbänder aktiviert werden und/oder die Fördergeschwindigkeit der aktivierten Längsförderbänder so geregelt wird, dass jedem Bereich des Querförderbandes so viele Produkte zugeführt werden, dass eine vorbestimmte Kapazität der Verarbeitungsstation erreicht wird.

Es ist bevorzugt, wenn jedem aktivierten Längsförderband einen Bruchteil der Querförderbandbreite zugewiesen wird und die Fördergeschwindigkeit jedes Längsförderbandes so geregelt wird, dass die jeweils zugewiesene Breite des Querförderbandes durch das jeweilige Längsförderband mit Produkten aufgefüllt wird.

Es ist bevorzugt, wenn jedes Längsförderband eine bestimmte Anzahl von Produkten vorspeichert und mittels Sensoren die auf jedem Längsförderband noch gespeicherten Produkten erfasst werden und einem Längsförderband mit wenigen Produkten ein geringerer Bruchteil der Querförderbandbreite zugewiesen wird als einem Längsförderband mit mehr Produkten, um eine zeitgleiche oder um einen bestimmten Betrag zeitversetzte Beendigung der Leerung aller Längsförderbänder zu erreichen.

Es ist bevorzugt, wenn ein am Auslaufbereich des Querförderbandes angeordneter Kraftsensor die horizontal zwischen den Produkten im Auslaufbereich herrschende Druckkraft misst und die Fördergeschwindigkeit des Querförderbandes in Abhängigkeit des Kraftsensorsignals geregelt wird.

Es ist bevorzugt, wenn die Fördergeschwindigkeit des Querförderbandes verringert wird, wenn die gemessene Druckkraft einen vorbestimmten Wert übersteigt.

Es ist bevorzugt, wenn die Fördergeschwindigkeit des Querförderbandes erhöht wird, wenn die gemessene Druckkraft einen vorbestimmten Wert unterschreitet.

Es ist bevorzugt, wenn die Fördergeschwindigkeit der Längsförderbänder und/oder des Querförderbandes stufenlos verändert wird.

Es ist bevorzugt, wenn ein Verarbeitungsstartzeitpunkt eingegeben wird und die Aktivierung und Fördergeschwindigkeit der Längsförderbänder und des Querförderbandes zu einem in Abhängigkeit des Abstands zwischen Längsförderbandeinmündung auf das Querförderband und Querförderbandfortschritt ermittelten Zeitpunkt gestartet werden, um zum Startzeitpunkt der Verarbeitungsstation Produkte in einer vorbestimmten Kapazität der Verarbeitungsstation zuzuführen.

Die Erfindung kann weiterhin implementiert sein in einem Computerprogrammprodukt zum Ablauf auf einen Computer, welches so programmiert ist, dass es die für die Regelung der erfindungsgemäßen Förderanordnung erforderlichen Schritte durchführt, wenn es auf einem Computer abläuft.

Eine bevorzugte Ausführungsform der Erfindung wird anhand der Figuren beschrieben. Es zeigen:
- Fig. 1:: Eine schematische Darstellung einer Förderanordnung mit sechs Stallgebäuden und Längsförderbändem und einem Querförderband,
- Fig. 1a: Eine vergrößerte Ansicht eines einzelnen Stallgebäudes aus Fig. 1
- Fig. 2:: Eine schematische Draufsicht auf den Bereich einer Stallreihe mit nebeneinander angeordneten Volieren,
- Fig. 3:: Eine quergeschnittene Seitenansicht des Bereichs des Längsförderbands und Ausrollbereichs aus einem Nest einer Voliere,

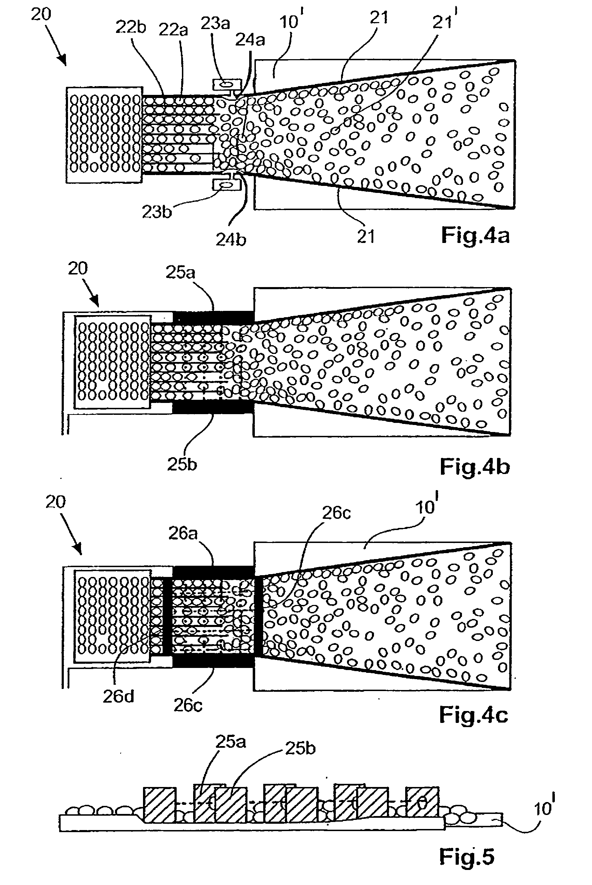

- Fig. 4a:: Eine erste Ausführungsform des Einlaufsbereichs eines Querförderbandes in einen Packer mit Kraftaufnahmevorrichtung,
- Fig. 4b:: Eine zweite Ausführungsform gem. Fig. 4a,
- Fig. 4c:: Eine dritte Ausführungsform gem. Fig. 4a,
- Fig. 5:: Eine Seitenansicht einer Variante der Ausführungsformen gem. Fig. 4b und 4c,

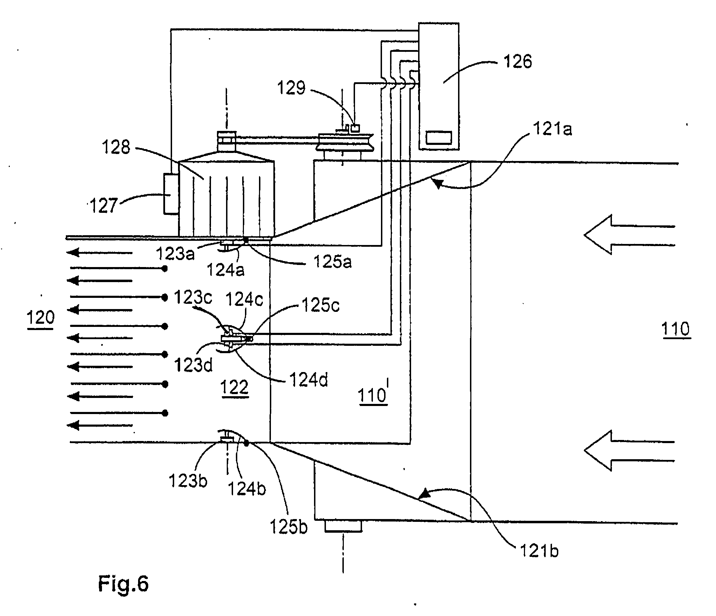

- Fig. 6:: Eine Draufsicht auf eine vierte Ausführungsform gem. Fig. 4a mit Querbandförderbandregelung,
- Fig. 7:: Eine schematische Darstellung einer Visualisierung des Förderfortschritts eines Querförderbands in einer Startphase des Fördervorgangs,
- Fig. 8:: Einen Ausschnitt aus Fig. 7 zu einem Zeitpunkt der Beendigung des Fördervorgangs,
- Fig. 9:: Eine schematische Darstellung einer weiteren Ausführungsform der erfindungsgemäßen Förderanordnung mit zwei Querförderbändem,
- Fig. 10:: Eine schematische Darstellung der Visualisierung des Förderbandfortschritts der Anordnung gem. Fig. 9, und
- Fig. 11:: Eine schematische Draufsicht auf einen Ausschnitt eines Querförderband mit fünf einmündenden Längsförderbändem und vier steuerbaren Produktleiteinrichtungen.

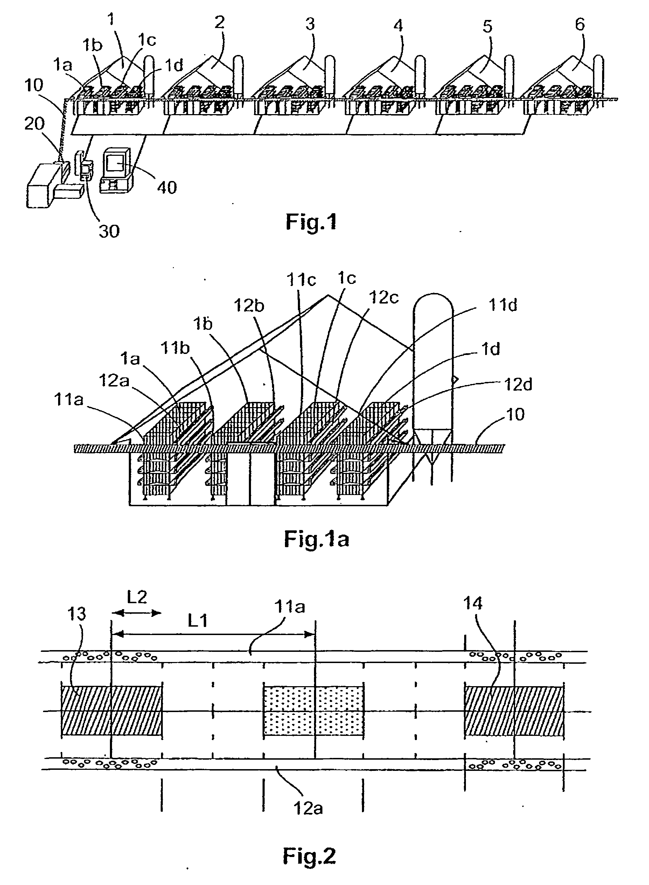

Fig. 1 zeigt eine Eierfarm mit sechs Stallgebäuden 1-6, in denen jeweils vier Doppelreihen 1 a-d mit mehreren Etagen hintereinander angereihter Volieren angeordnet ist.

Die Stallgebäude 1-6 sind so nebeneinander angeordnet, dass ein Querförderband 10 an der Stirnseite der Stallgebäude geradlinig durchlaufen kann. Das Querförderband 10 ist im Bereich der Stallgebäude rechtwinklig zu den Volierenreihen 1 a-d ausgerichtet.

Wie insbesondere in Fig. 1 a gut zu erkennen, sind an jeder Seite der Volierenreihen 1a-d jeweils parallel zueinander angeordnete Längsförderbänder 11a-d und 12a-d angeordnet. Jede Etage der Volierenreihen hat eigene Längsförderbänder, so dass sich für die fünf Etagen der Volierenreihen gem. Fig. 1, 1a insgesamt 10 Längsförderbänder pro Volierenreihe und 40 Längsförderbänder pro Stallgebäude ergeben. Die Längsförderbänder der einzelnen Volierenreihen münden alternativ in einen Elevator an der Stirnseite jeder Volierenreihe, der die Eier aus den 10 Längsförderbändem einer Volierenreihe auf das Querförderband hebt oder das Querförderband 10 wird in der Höhe verfahren und die fünf Etagen der Volierenreihen werden zeitlich aufeinanderfolgend gesammelt.

Das Querförderband 10 fördert in den Figuren 1, 1 a von rechts nach links und mündet in eine Packstation 20, in der die Eier verpackt werden.

Eine zentrale Steuer- und Regeleinheit 30 ist mit peripheren Steuer- und Regeleinheiten in jedem Stallgebäude verbunden und führt die erfindungsgemäßen Steuer- und Regelvorgänge der Längsförderbänder und des Querförderbands 10 aus.

Eine zentrale Farmsteuerung 40 ermöglicht eine Anwahl von Parametern, eine Visualisierung des Eiersammelvorgangs und der Auslastung der einzelnen Förderbänder.

Fig. 2 zeigt eine Draufsicht auf einen Ausschnitt einer Doppelvolierenreihe mit vier Volieren und links und rechts anschließenden, teilweise dargestellten weiteren je zwei Volieren. Eine einzelne Voliere erstreckt sich über eine Länge L1 der Längsförderbänder 11a, 12a. Ein Bruchteil L2 der Länge L1 wird durch einen Nestbereich in der Voliere eingenommen. Im Bereich der Länge L2 werden über 90% der Eier von den Hennen der Voliere gelegt, so dass das Förderband im Bereich L2 bei Stillstand in kurzer Zeit während der Legezeit aufgefüllt wird.

Zwei Nestbereiche benachbarter Volieren grenzen unmittelbar aneinander, wie in Fig. 2 erkennbar. Die Längsförderbänder 11a, 12a müssen daher, wenn das Längsförderband im Bereich des Nestes mit Eiern aufgefüllt ist, zumindest um die zweimalige Länge L2 vorgezogen werden, um einen leerstehenden Förderbandanteil in den Nestbereich zu bringen. Da L2 im vorliegenden Beispiel ein Viertel von L1 beträgt, kann dieser Vorzugvorgang des Längsförderbands 11a, 12a dreimalig erfolgen. Beim vierten Mal würde der aufgefüllte Bereich des Längsförderbands 11a, 12a aus dem Nestbereich 13 in den Nestbereich 14 gefördert. Da in diesem Fall das Längsförderband somit voll ist, muss nach dreimaligem Vorziehen um die Länge 2 x L2 das Längsförderband dauerhaft betrieben werden, bis alle Eier vom Längsförderband 11a, 12a auf das Querförderband 10 gefördert sind.

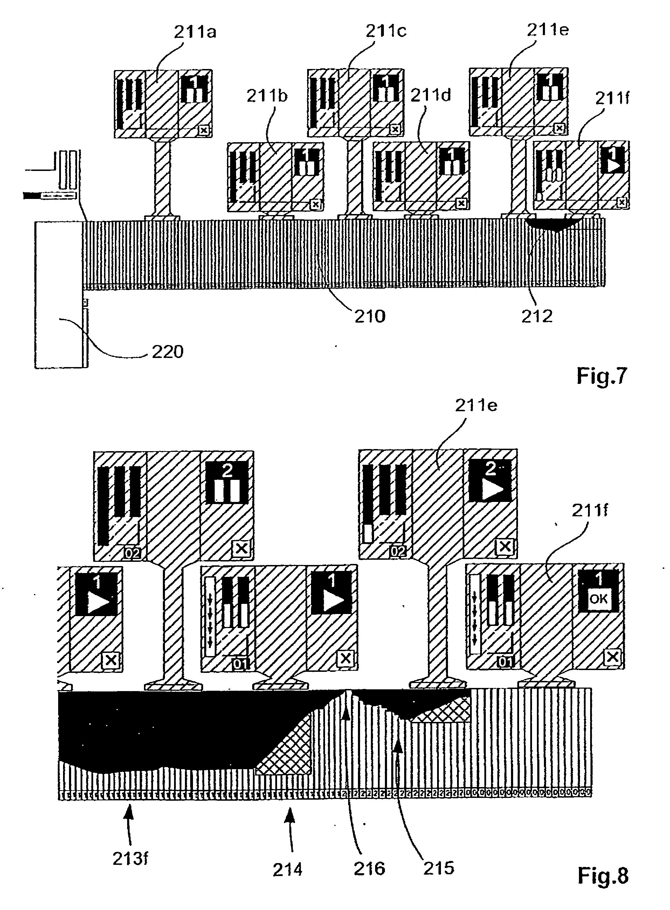

Fig. 7 zeigt ein Beispiel einer Visualisierung der Auslastung und des Fortschritts des Querförderbands. Das Querförderband 210 ist in eine Vielzahl von Querstreifen unterteilt, von denen jeweils einer eine Querförderbandlänge von 1m repräsentiert.

Entlang des Querförderbands münden sechs Längsförderbänder 211 a-f an beabstandeten Orten auf das Querförderband 210. Die Längsförderbänder werden durch Kastensymbole 211a-f dargestellt, in denen Parameter zu den Fördereigenschaften des Längsförderbands abgebildet sind.

An der linken Stirnseite mündet das Querförderband 210 in eine Packstation 220.

Fig. 7 zeigt einen Förderanordnungszustand, in dem vor einem kurzen Zeitraum mit der Sammlung vom Längsförderband 211 begonnen wurde. Dies wird durch schwarze Balken in den Querförderbandbereichen in Förderrichtung hinter der Einmündung des Längsförderbands 211f dargestellt. Der schwarze Balkenbereich 212 symbolisiert die auf dem Querförderband abgelegten Eier. Weiterhin symbolisiert ein schraffierter Rechteckbereich in dem Mündungsbereich des Längsförderbands 211f die dem Längsförderband 211f zugewiesene Querförderbandbreite.

Fig. 8 zeigt die Anordnung gem. Fig. 7 zu einem späteren Zeitpunkt des Fördervorgangs. Das Querförderband nimmt in einem auf einem Sollwert aufgefüllten Bereich 213 Eier in einer Querförderbandkapazität von 80% auf, was einen Sicherheitsabstand zur Vollauslastung einhält. In einem Bereich 214 ist das Auslaufen der Sammlung der ersten Gruppe von Eiern zu erkennen, was durch eine diagonal abnehmende Auslastung der Querförderbandbreite erkennbar ist. In Förderrichtung hinter der ersten Gruppe folgt eine zweite Gruppe von Eiern, die durch Aktivierung des Längsförderbands 211e auf das Querförderband aufgebracht wird. Zwischen der Gruppe 213,214 und der Gruppe 215 ist eine Lücke 216 gelassen, welche einen kurzen Zeitraum für eine Umrüstung der Packstation 220 lässt.

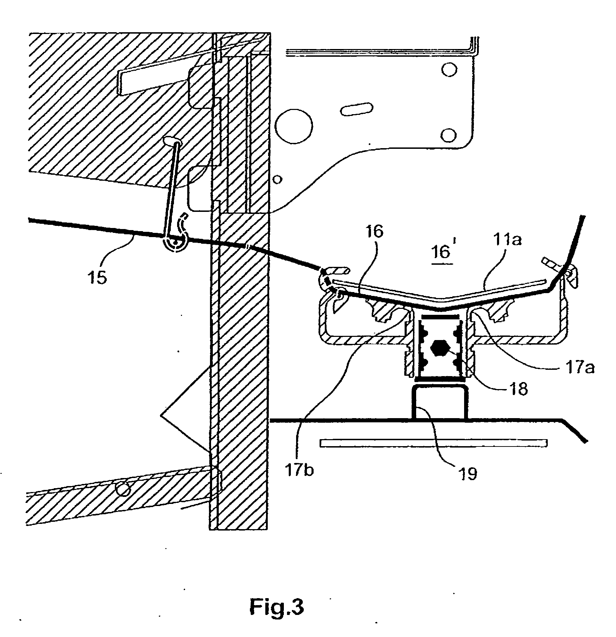

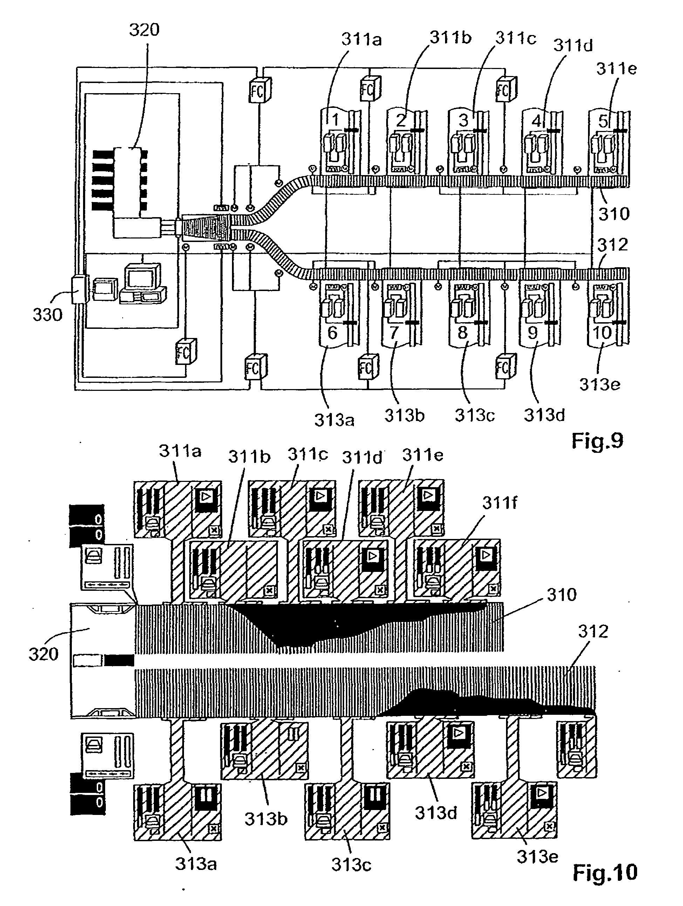

Fig. 9 zeigt eine schematische Draufsicht auf eine Förderanordnung mit zwei Querförderbändern 310,312 und Fig. 10 zeigt eine schematische Darstellung der Visualisierung dieser Förderanordnung. Wie erkennbar ist, sind an jedem Querförderband 310,312 mehrere Längsförderbänder 311a-e,313a-e angeordnet, die an beabstandeten Orten auf das Querförderband 310 bzw. 312 einmünden. Jedes Längsförderband 311a-e,313a-e verfügt über eine eigene dezentrale Steuerung, die in Abhängigkeit eines Wiegesensors gem. Fig. 3 das Längsförderband ansteuert und auf Befehl einer übergeordneten zentralen Steuerung 330 eine Gesamtentleerung des Längsförderbands auf das entsprechende Querförderband veranlasst.

Beide Querförderbänder 310,312 münden in eine Packstation 320.

Wie aus Fig. 10 erkennbar, sind die auf dem Querförderband gesammelten Eier lokal versetzt aufgebracht aus vier aktivierten Längsförderern 311c-f und werden als zusammenhängender Block in der Kapazität der Packstation 320 der Packstation 320 zugeführt. Auf dem Querförderband 312 sind lediglich die Längsförderbänder 313d-f aktiv und erst nach weiterem Fortschritt des Querförderbands 312 werden die weiteren Längsförderbänder 313a-c zugeschaltet.

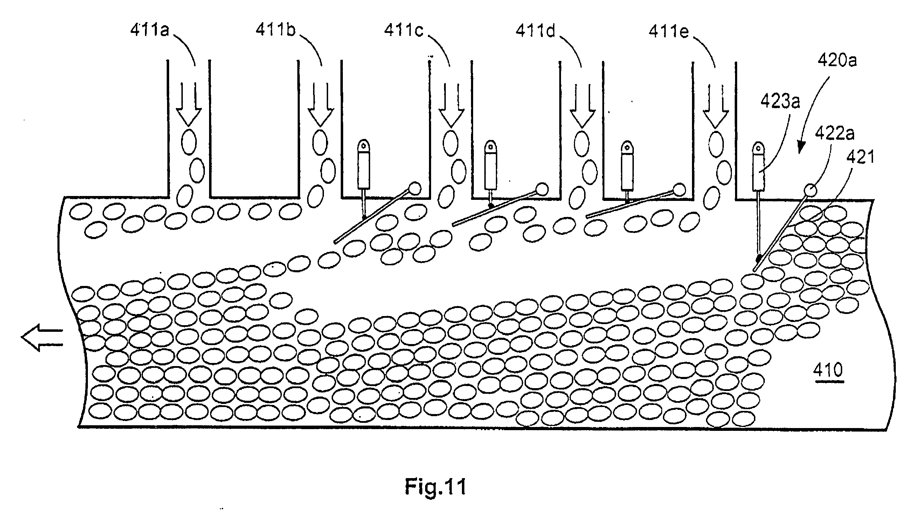

Fig. 11 zeigt einen Ausschnitt eines Querförderbands 410 mit mehreren einmündenden Längsförderbändem 411a-e, deren Einmündungsorte in Förderrichtung des Querförderbands 410 voneinander beabstandet sind. Auf dem Querförderband werden in Förderrichtung F eine Vielzahl von Eiern gefördert, die durch Kreise auf dem Querförderband symbolisiert sind.

Wie ersichtlich, gelangen die Produkte am in Querförderbandrichtung gesehen rechten Rand in den abgebildeten Ausschnitt des Querförderbands und würden daher die Zuleitung weiterer Eier aus den Längsförderbändern 411 a-e behindern, da diese zunächst mit einem erheblichen Horizontaldruck die bereits auf dem Querfördeband befindlichen Eier in Richtung des in Förderrichtung des Querförderbands gesehen linken Randes drücken müssten. Hierbei können Beschädigungen der Eier auftreten.

Vor dem in Förderrichtung des Querförderbands zuvorderst gelegenen Längsförderband 411e ist eine Eileitvorrichtung 420a angeordnet, die eine Eileitplatte 421a umfasst, die in einem seitlich und ortsfest gelagerten Schwenklager 422a schwenkbar gelagert ist. Die Eileitplatte 421a kann mittels eines Aktuators, der in diesem Fall ein elektrischer Linearantrieb 423a mit Stellungsrückmeldung ist, in den Bereich oberhalb des Querförderbands eingeschwenkt werden oder aus diesem Bereich herausgeschwenkt werden.

In gleicher Weise und analog aufgebaut sind zwischen den Längsförderbändem 411 d und e, zwischen den Längsförderbändem 411 c und d und zwischen den Längsförderbändem 411 b und c jeweils eine Eileitvorrichtung 420b und d angeordnet, die in gleicher Weise aufgebaut sind wie die Eileiteinrichtung 420a.

Im dargestellten Förderzustand werden zu den bereits auf dem Querförderband befindlichen Eiern noch weitere Eier aus den Längsförderbändem 411a,b und d,e gefördert. Um in diesem Förderzustand eine Beschädigung der zusätzlichen zugeförderten Eier oder der bereits auf dem Querförderband befindlichen Eier zu vermeiden, ist die Eileitvorrichtung 420a soweit in den Bereich oberhalb des Querförderbands hineingeschwenkt, dass die Eier vom rechten an den linken Rand abgeleitet werden und hierdurch Platz für die zusätzlich hinzukommenden Eier aus den Längsförderbändem 411a,b,d,e geschaffen wird. Die Eileitvorrichtungen 420b und c sind nicht ausgeschwenkt.

Die Eileitvorrichtung 420d ist um einen geringeren Betrag als die Eileitvorrichtung 420a ausgeschwenkt, um die zusätzlich aus den Längsförderbändern 411d,e hinzugekommenen Eier vom rechten Rand des Querförderbands wegzuleiten und somit Platz für die aus den Längsförderbändern 411a,b hinzugetretenen Eier zu schaffen, ohne hierbei den gesamten Eierstrom des Querförderbands zu weit in Richtung des linken Randes des Querförderbands zu leiten, so dass Beschädigungen an den bereits auf dem Querförderband befindlichen Eiern verursacht würden.

Die elektrischen Linearantriebe 423a-d und die Stellungsrückmeldungseinheiten dieser Antriebe der Eileitvorrichtungen 420a-d sind mit der zentralen Steuerungsvorrichtung gekoppelt und werden in Abhängigkeit der Anzahl der bereits auf dem Querförderband befindlichen Eier und der Anordnung und gegebenenfalls Förderrate der zusätzlich hinzufördernden Längsförderbänder betätigt und soweit ausgefahren, dass weder eine Beschädigung der abgeleiteten Eier noch eine Beschädigung der hinzutretenden Eier auftreten kann.

Das erfindungsgemäße Förderverfahren funktioniert wie folgt:

Zu einem Zeitpunkt etwa drei Stunden nach Legebeginn wird das am weitesten von der Packstation entfernte Längsförderband 311f aktiviert und fördert die Eier auf das Querförderband 310. Das Querförderband 310 wird ebenfalls aktiviert und fördert die Eier in Richtung der Packstation. Sobald die vom Längsförderband 311f auf das Querförderband gebrachten Eier die Einmündung des Längsförderbands 311 e erreichen, wird auch das Längsförderband 311 e aktiviert und fördert Eier auf das Querförderband 310. Auf diese Weise summieren sich die Eier der beiden Längsförderbänder 311e,f zu einer aufsummierten Querförderbandbreite. Sobald dieser Bereich die Einmündung des Längsförderbands 311 d erreicht, wird auch dieses Längsförderband aktiviert u.s.w. bis zur Aktivierung des Längsförderbands 311a. Auf diese Weise wird in voller Breite des Querförderbands eine Auslastung erreicht und zu Arbeitsbeginn der Packer an der Packstation 320 ist das Querförderband voll gefüllt und steht kurz vor der Packstation 320.

Die von jedem Längsförderband zugeführten Eier werden im Bereich der Einmündung der Längsförderbänder gezählt, um eine Kontrolle über die Legeleistung des jeweiligen Stalls bzw. der jeweiligen Volierenreihen zu erhalten. Weiterhin ermöglicht diese Eierzählung eine genaue Bestimmung der auf dem Querförderband befindlichen Eier. Sobald erkannt wird, dass ein Längsförderband eine sehr hohe Anzahl von Eiern enthält, beispielsweise indem bereits bei geringem Längsförderbandvorschub eine hohe Anzahl von Eiern gezählt wird, wird diesem Längsförderband eine größere Querförderbandbreite zugewiesen und den anderen Längsförderbändem eine entsprechend verringerte Breite. Hierdurch wird sichergestellt, dass auch das überdurchschnittlich gefüllt Längsförderband innerhalb eines Zeitraums entleert wird, indem auch die anderen Längsförderbänder entleert werden. Diese dynamische Regelung kann gegebenenfalls weiter angepasst werden, wenn sich andere Längsförderbänder als verspätet oder verfrüht entleert abzeichnen.

Das erfindungsgemäße Verfahren ermöglicht erstmals eine automatische Regelung und Vollauslastung der Packstation in Abhängigkeit der von den einzelnen Längsförderbändem zugeführten Eier und deren individuellem Abstand von der Packstation sowie dem jeweils aktuellen Querförderbandfortschritt.

## Patentansprüche

1. Förderanordnung, umfassend
- ein Querförderband (10), welches Produkte zu einer Verarbeitungsstation fördert, und
- mehrere Längsförderbänder (11a-d, 12a-d), die so angeordnet sind, dass sie Produkte an verschiedenen, voneinander beabstandeten Orten auf das Querförderband befördern,
**gekennzeichnet durch** eine Vorrichtung (129) zum Erfassen des Förderfortschritts des Querförderbands und eine mit dieser Vorrichtung gekoppelte Regelungsvorrichtung (30), die ausgebildet ist, um zu Beginn eines Fördervorgangs der Förderanordnung die Längsförderbänder in Abhängigkeit des Abstands zwischen ihrer Einmündung auf das Querförderband und der Verarbeitungsstation und in Abhängigkeit des Förderfortschritts des Querförderbands zeitversetzt In Gang zu setzen und **dadurch** gekennzeichnet, dass die Regelungsvorrichtung ausgebildet ist, um so viele Längsförderbänder zu aktivieren und/oder die Fördergeschwindigkeit der aktivierten Längsförderbänder so zu regeln, dass jedem Bereich des Querförderbandes so viele Produkte zugeführt werden, dass eine vorbestimmte Kapazität der Verarbeitungsstation erreicht wird.

2. Förderanordnung nach dem Anspruch 1,
**dadurch gekennzeichnet, dass** die Regelungsvorrichtung ausgebildet ist, um ein am weitesten von der Verarbeitungsstation entferntes erstes Längsförderband zuerst in Gang zu setzen und ein näher zur Verarbeitungsstation angeordnetes zweites Förderband zu einem Zeitpunkt in Gang zu setzen, zu dem das Querförderband soweit fortgeschritten ist, dass die vom ersten Längsförderband zugeförderten Produkte den Einmündungsbereich des zweiten Längsförderbands erreicht haben.

3. Förderanordnung nach einem der vorhergehenden Ansprüche,
**dadurch gekennzeichnet, dass** zumindest zwei Gruppen von Längsförderbändem definiert sind und die Regelungsvorrichtung ausgebildet ist, um die Produkte der Längsförderbänder einer ersten Gruppe auf dem Querförderband vor den Produkten der Längsförderbänder einer zweiten Gruppe anzuordnen und dass die Regelungsvorrichtung vorzugsweise ausgebildet ist, um in jeder Gruppe zuerst das am weitesten von der Verarbeitungsstation entfernte Längsförderband zu betätigen.

4. Förderanordnung nach dem vorhergehenden Anspruch 3,
**dadurch gekennzeichnet, dass** die Regelungsvorrichtung ausgebildet ist, um die Längsförderbänder der Gruppe mit dem am weitesten von der Verarbeitungsstation entfernten Längsförderband als letzte Gruppe zu betätigen.

5. Förderanordnung nach einem der vorhergehenden Ansprüche 3 oder 4,
**dadurch gekennzeichnet, dass** die Regelungsvorrichtung ausgebildet ist, um den Zeitpunkt des Stops des letzten Längsförderbands einer Gruppe und der Aktivierung des ersten Längsförderbands einer darauffolgenden Gruppe in Abhängigkeit des Abstands zwischen der Einmündung des letzten Längsförderbands und des ersten Längsförderbands auf das Querförderband und dem Querförderbandfortschritt zu bestimmen und dass die Regelungsvorrichtung vorzugsweise ausgebildet ist, um die Längsförderbänder und das Querförderband zu stoppen, wenn das letzte Produkt einer Gruppe in die Verarbeitungsvorrichtung gefördert worden ist.

6. Förderanordnung nach dem vorhergehenden Anspruch 5,
**dadurch gekennzeichnet, dass** die Regelungsvorrichtung ausgebildet ist, um die Zeitpunkte so zu bestimmen, dass die letzten Produkte des letzten Längsförderbandes der ersten Gruppe und die ersten Produkten des ersten Längsförderbands der zweiten Gruppe in einem gemeinsamen Mischbereich auf dem Querförderband abgelegt werden.

7. Förderanordnung nach dem vorhergehenden Anspruch 5 oder 6,
**dadurch gekennzeichnet, dass** die Regelungsvorrichtung ausgebildet ist, um die Zeitpunkte so zu bestimmen, dass zwischen den Produkten der ersten Gruppe von Längsförderbändern und den Produkten der zweiten Gruppe von Längsförderbändern ein Zwischenraum auf dem Querförderband ausgebildet wird.

8. Förderanordnung nach einem der vorhergehenden Ansprüche,
**dadurch gekennzeichnet, dass** die Regelungsvorrichtung ausgebildet ist, um jedem aktivierten Längsförderband einen Bruchteil der Querförderbandbreite zuzuweisen und die Fördergeschwindigkeit jedes Längsförderbandes so zu regeln, dass die jeweils zugewiesene Breite des Querförderbandes durch das jeweilige Längsförderband mit Produkten aufgefüllt wird.

9. Förderanordnung nach einem der vorhergehenden Ansprüche,
**dadurch gekennzeichnet, dass** die Regelungsvorrichtung ausgebildet ist, um jedem aktivierten Längsförderband einen Bruchteil der Querförderbandbreite zuzuweisen und die Fördergeschwindigkeit jedes Längsförderbandes so zu regeln, dass die jeweils zugewiesene Breite des Querförderbandes durch das jeweilige Längsförderband mit Produkten aufgefüllt wird.

10. Förderanordnung nach Anspruch 9,
**dadurch gekennzeichnet, dass** jedes Längsförderband eine bestimmte Anzahl von Produkten vorspeichert und die Regelungsvorrichtung mit Sensoren zur Erfassung der auf jedem Längsförderband noch gespeicherten Produkten gekoppelt und ausgebildet ist, um einem Längsförderband mit wenigen Produkten einen geringeren Bruchteil der Querförderbandbreite zuzuweisen als einem Längsförderband mit mehr Produkten, um eine zeitgleiche oder um einen bestimmten Betrag zeitversetzte Beendigung der Leerung aller Längsförderbänder zu erreichen.

11. Förderanordnung nach einem der vorhergehenden Ansprüche,
**gekennzeichnet durch** eine Anzeigevorrichtung, welche mit der Regelungsvorrichtung gekoppelt ist um von der Regelungsvorrichtung Signale zur ortsaufgelösten Darstellung der Anzahl der Produkte auf dem Querförderband zu erhalten.

12. Förderanordnung nach einem der vorhergehenden Ansprüche,
**gekennzeichnet durch** Produktzählvorrichtungen im Einmündungsbereich der Längsförderbänder, welche die Anzahl der dem Querförderband zugeführten Produkte erfassen und an die zentrale Steuerung übermitteln.

13. Verwendung einer Förderanordnung nach einem der vorhergehenden Ansprüche zum Fördern von Eiern auf einem Querförderband ausgebildet ist, um Eier in einen Zwischenspeicherbereich zu fördern, der in Förderrichtung vor einer Weiterverarbeitungsanlage, insbesondere einer Verpackungsanlage angeordnet ist.

14. Verfahren zum Fördern von Produkten, mit den Schritten
- Fördern von Produkten auf einem Querförderband zu einer Verarbeitungsstation, und
- Zufördern von Produkten mittels mehrerer Längsförderbänder, zu verschiedenen, voneinander beabstandeten Orten auf das Querförderband,
**dadurch gekennzeichnet, dass** der Förderfortschritt des Querförderbands erfasst wird und zu Beginn des Fördervorgangs die Längsförderbänder in Abhängigkeit des Abstands zwischen ihrer Einmündung auf das Querförderband und der Verarbeitungsstation und in Abhängigkeit des Förderfortschritts des Querförderbands zeitversetzt in Gang gesetzt werden und dass die Fördergeschwindigkeit der Längsförderbänder so geregelt wird, dass
- jedem Bereich des Querförderbandes so viele Produkte zugeführt werden, dass eine vorbestimmte Kapazität der Verarbeitungsstation erreicht wird.

## Claims

1. Conveyor system, comprising:
- a transverse conveyor belt (10), which conveys products to a processing station, and
- several longitudinal conveyor belts (11a-d, 12a-d), which are disposed so that they convey products to the transverse conveyor belt at different locations at a distance apart from one another,
**characterised by** a device (129) for detecting the advance of the transverse conveyor belt and a control device (30) coupled with this device, which is configured to set the longitudinal conveyor belts in motion at different times at the start of a conveying operation of the conveyor system depending on the distance between their opening point onto the transverse conveyor belt and the processing station and depending on the advance of the transverse conveyor belt, and **characterised in that** the control device is configured to activate as many longitudinal conveyor belts as needed and/or regulate the conveying speed of the activated longitudinal conveyor belts so that the number of products delivered to each region of the transverse conveyor belt is such that a predefined capacity is achieved at the processing station.

2. Conveyor system as claimed in claim 1,
**characterised in that** the control device is configured to set a first longitudinal conveyor belt at the farthest distance from the processing station in motion first of all and to set a second conveyor belt disposed closer to the processing station in motion at a point in time when the transverse conveyor belt has advanced far enough for the products conveyed by the first longitudinal conveyor belt to have reached the opening region of the second longitudinal conveyor belt.

3. Conveyor system as claimed in one of the preceding claims,
**characterised in that** at least two groups of longitudinal conveyor belts are defined and the control device is configured to dispose the products of the longitudinal conveyor belts of a first group on the transverse conveyor belt before the products of the longitudinal conveyor belts of a second group, and **in that** the control device is preferably configured to activate the longitudinal conveyor belt at the farthest distance from the processing station in each group first.

4. Conveyor system as claimed in preceding claim 3,
**characterised in that** the control device is configured to activate the longitudinal conveyor belts of the group having the longitudinal conveyor belt at the farthest distance from the processing station as the last group.

5. Conveyor system as claimed in one of preceding claims 3 or 4,
**characterised in that** the control device is configured to determine the point in time at which the last longitudinal conveyor belt of a group is stopped and the first longitudinal conveyor belt of a subsequent group is activated depending on the distance between the opening point onto the transverse conveyor belt of the last longitudinal conveyor belt and the first longitudinal conveyor belt and the progress of the transverse conveyor belt , and **in that** the control device is preferably configured to stop the longitudinal conveyor belts and transverse conveyor belt when the last product of a group has been conveyed into the processing device.

6. Conveyor system as claimed in preceding claim 5,
**characterised in that** the control device is configured to determine the points in time at which the last products of the last longitudinal conveyor belt of the first group and the first products of the first longitudinal conveyor belt of the second group have been deposited on the transverse conveyor belt in a common mixing region.

7. Conveyor system as claimed in preceding claim 5 or 6,
**characterised in that** the control device is configured to determine the points in time in such a way that a gap is created on the transverse conveyor belt between the products of the first group of longitudinal conveyor belts and the products of the second group of longitudinal conveyor belts.

8. Conveyor system as claimed in one of the preceding claims,
**characterised in that** the control device is configured to assign a fraction of the transverse conveyor belt width to each activated longitudinal conveyor belt and regulate the conveying speed of each longitudinal conveyor belt so that the respectively assigned width of the transverse conveyor belt is filled with products by the respective longitudinal conveyor belt.

9. Conveyor system as claimed in one of the preceding claims,
**characterised in that** the control device is configured to assign a fraction of the transverse conveyor belt width to each activated longitudinal conveyor belt and regulate the conveying speed of each longitudinal conveyor belt so that the respectively assigned width of the transverse conveyor belt is filled with products by the respective longitudinal conveyor belt.

10. Conveyor system as claimed in claim 9,
**characterised in that** every longitudinal conveyor belt stores a specific number of products in readiness and the control device is coupled with sensors for detecting the products still stored on each longitudinal conveyor belt coupled and configured so as to assign a smaller fraction of the transverse conveyor belt width to a longitudinal conveyor belt with few products than a longitudinal conveyor belt with more products so as to ensure that the process of emptying all the longitudinal conveyor belts is terminated at a same time or at a different time offset by a specific amount.

11. Conveyor system as claimed in one of the preceding claims,
**characterised by** a display device coupled with the control device for receiving signals from the control device for displaying the number of products on the transverse conveyor belt on a location-based resolution.

12. Conveyor system as claimed in one of the preceding claims,
**characterised by** a product counting device in the opening regions of the longitudinal conveyor belts, which detects and transmits to the central controller the number of products conveyed to the transverse conveyor belt.

13. Use of a conveyor system as claimed in one of the preceding claims for conveying eggs on a transverse conveyor belt, configured to convey eggs to an intermediate storage region disposed upstream of an additional processing plant, in particular a packaging plant, in the conveying direction.

14. Method of conveying products, comprising the steps of
- conveying products on a transverse conveyor belt to a processing station, and
- conveying products by means of several longitudinal conveyor belts onto the transverse conveyor belt at different locations at a distance apart from one another,
**characterised in that** the advance of the transverse conveyor belt is detected and the longitudinal conveyor belts are set in motion at the start of the conveying operation at different times depending on the distance between the point where they open onto the transverse conveyor belt and the processing station and depending on the advance of the transverse conveyor belt, and **in that** the conveying speed of the longitudinal conveyor belts is regulated so that
- the number of products delivered to each region of the transverse conveyor belt is such that a predefined capacity of the processing station is obtained.

## Revendications

1. Ensemble de convoyage, comprenant
- une bande transporteuse transversale (10) qui transporte des produits vers un poste de traitement, et
- plusieurs bandes transporteuses longitudinales (11a-d, 12a-d) qui sont disposées de sorte à transporter des produits à différents endroits espacés les uns des autres sur la bande transporteuse transversale,
**caractérisé par** un dispositif (129) destiné à détecter l'avancement de transport de la bande transporteuse transversale et un dispositif de régulation (30) couplé à ce dispositif qui est réalisé afin de mettre en marche avec un décalage temporel, au début d'un processus de transport de l'ensemble de convoyage, les bandes transporteuses longitudinales en fonction de la distance entre leur débouché sur la bande transporteuse transversale et le poste de traitement et en fonction de l'avancement de transport de la bande transporteuse transversale et **caractérisé en ce que** le dispositif de régulation est réalisé afin d'activer de nombreuses bandes transporteuses longitudinales et/ou de réguler la vitesse de transport des bandes transporteuses longitudinales activées de sorte que de nombreux produits soient amenés à chaque zone de la bande transporteuse transversale de manière qu'une capacité prédéterminée du poste de traitement soit atteinte.

2. Ensemble de convoyage selon la revendication 1, **caractérisé en ce que** le dispositif de régulation est réalisé afin de mettre en marche tout d'abord une première bande transporteuse longitudinale la plus éloignée du poste de traitement et une seconde bande transporteuse disposée plus près du poste de traitement à un moment où la bande transporteuse transversale est si avancée que les produits amenés par la première bande transporteuse longitudinale ont atteint la zone de débouché de la seconde bande transporteuse longitudinale.

3. Ensemble de convoyage selon l'une quelconque des revendications précédentes, **caractérisé en ce qu'**au moins deux groupes de bandes transporteuses longitudinales sont définis et le dispositif de régulation est réalisé afin de disposer les produits des bandes transporteuses longitudinales d'un premier groupe sur la bande transporteuse transversale avant les produits des bandes transporteuses longitudinales d'un second groupe et **en ce que** le dispositif de régulation est de préférence réalisé afin d'actionner tout d'abord dans chaque groupe la bande transporteuse longitudinale la plus éloignée du poste de traitement.

4. Ensemble de convoyage selon la revendication précédente 3, **caractérisé en ce que** le dispositif de régulation est réalisé afin d'actionner les bandes transporteuses longitudinales du groupe avec la bande transporteuse longitudinale la plus éloignée du poste de traitement comme dernier groupe.

5. Ensemble de convoyage selon l'une quelconque des revendications précédentes 3 ou 4, **caractérisé en ce que** le dispositif de régulation est réalisé afin de déterminer le moment de l'arrêt de la dernière bande transporteuse longitudinale d'un groupe et de l'activation de la première bande transporteuse longitudinale d'un groupe suivant en fonction de la distance entre le débouché de la dernière bande transporteuse longitudinale et de la première bande transporteuse longitudinale sur la bande transporteuse transversale et l'avancement de la bande transporteuse transversale et **en ce que** le dispositif de régulation est de préférence réalisé afin d'arrêter les bandes transporteuse et la bande transporteuse transversale lorsque le dernier produit d'un groupe a été transporté dans le dispositif de traitement.

6. Ensemble de convoyage selon la revendication précédente 5, **caractérisé en ce que** le dispositif de régulation est réalisé afin de déterminer les moments de sorte que les derniers produits de la dernière bande transporteuse longitudinale du premier groupe et les premiers produits de la première bande transporteuse longitudinale du second groupe soient déposés dans une zone de mélange commune sur la bande transporteuse transversale.

7. Ensemble de convoyage selon la revendication précédente 5 ou 6, **caractérisé en ce que** le dispositif de régulation est réalisé afin de déterminer les moments de sorte qu'entre les produits du premier groupe de bandes transporteuses longitudinales et les produits du second groupe de bandes transporteuses longitudinales, un espace intermédiaire soit réalisé sur la bande transporteuse transversale.

8. Ensemble de convoyage selon l'une quelconque des revendications précédentes, **caractérisé en ce que** le dispositif de régulation est réalisé afin d'associer à chaque bande transporteuse longitudinale activée une fraction de la largeur de bande transporteuse transversale et de réguler la vitesse de transport de chaque bande transporteuse longitudinale de sorte que la largeur respectivement associée de la bande transporteuse transversale soit remplie de produits par la bande transporteuse longitudinale respective.

9. Ensemble de convoyage selon l'une quelconque des revendications précédentes, **caractérisé en ce que** le dispositif de régulation est réalisé afin d'associer à chaque bande transporteuse longitudinale activée une fraction de la largeur de bande transporteuse transversale et de réguler la vitesse de transport de chaque bande transporteuse longitudinale de sorte que la largeur respectivement associée de la bande transporteuse transversale soit remplie de produits par la bande transporteuse longitudinale respective.

10. Ensemble de convoyage selon la revendication 9, **caractérisé en ce que** chaque bande transporteuse longitudinale préstocke un nombre déterminé de produits et le dispositif de régulation est couplé avec des capteurs pour la détection des produits encore stockés sur chaque bande transporteuse longitudinale et est réalisé afin d'associer à chaque bande transporteuse longitudinale avec peu de produits une fraction moindre de la largeur de bande transporteuse transversale qu'une bande transporteuse longitudinale avec plus de produits afin d'obtenir une fin simultanée ou décalée dans le temps d'une valeur déterminée du vidage de tous les bandes transporteuses longitudinales.

11. Ensemble de convoyage selon l'une quelconque des revendications précédentes, **caractérisé par** un dispositif d'affichage qui est couplé au dispositif de régulation afin d'obtenir, du dispositif de régulation, des signaux pour la représentation à résolution spatiale du nombre de produits sur la bande transporteuse transversale.

12. Ensemble de convoyage selon l'une quelconque des revendications précédentes, **caractérisé par** des dispositifs de comptage de produits dans la zone de débouché des bandes transporteuses longitudinales qui détectent le nombre de produits amenés à la bande transporteuse transversale et le transmettent à la commande centrale.

13. Utilisation d'un ensemble de convoyage selon l'une quelconque des revendications précédentes réalisé pour le transport d'oeufs sur une bande transporteuse transversale afin de transporter des oeufs dans une zone de stockage intermédiaire qui est disposée dans le sens de transport devant une installation de traitement ultérieur, en particulier une installation d'emballage.

14. Procédé de transport de produits avec les étapes suivantes :
- transport de produits sur une bande transporteuse transversale vers un poste de traitement, et
- amenée de produits à l'aide de plusieurs bandes transporteuses longitudinales à différents endroits espacés les uns des autres sur la bande transporteuse transversale, **caractérisé en ce que** l'avancement de transport de la bande transporteuse transversale est détecté et au début du processus de transport, les bandes transporteuses longitudinales sont mises en marche avec un décalage dans le temps en fonction de la distance entre leur débouché sur la bande transporteuse transversale et le poste de traitement et en fonction de l'avancement de transport de la bande transporteuse transversale et **en ce que** la vitesse de transport des bandes transporteuses longitudinales est régulée de sorte que
- de nombreux produits sont amenés à chaque zone de la bande transporteuse transversale de sorte qu'une capacité prédéterminée du poste de traitement soit atteinte.
